# EUROPÄISCHE PATENTSCHRIFT

(11) **EP 2 026 993 B1**
(45) Veröffentlichungstag und Bekanntmachung des Hinweises auf die Patenterteilung: **29.09.2010**
(21) Anmeldenummer: 07729678.8
(22) Anmeldetag: 30.05.2007
(51) Int. Cl.: B60R 13/08, B62D 25/12, G10K 11/168

(54) **LUFTSCHALL ABSORBIERENDE MOTORRAUMVERKLEIDUNG FÜR KRAFTFAHRZEUGE, INSBESONDERE MOTORHAUBENVERKLEIDUNG**
AIRBORNE-SOUND-ABSORBING ENGINE COMPARTMENT COVERING FOR MOTOR VEHICLES, IN PARTICULAR BONNET COVERING
HABILLAGE DE COMPARTIMENT MOTEUR ABSORBANT LES BRUITS AERIENS POUR VEHICULES AUTOMOBILES, NOTAMMENT HABILLAGE DE CAPOT MOTEUR

(30) Priorität: 09.06.2006 DE 202006009245 U
(43) Veröffentlichungstag der Anmeldung: 25.02.2009
(73) Patentinhaber: Carcoustics TechConsult GmbH, 51381 Leverkusen (DE)
(72) Erfinder: EBBITT, Gordon, Ann Arbor, Michigan 48105 (US); CARLSON, Larry, Brighton, Michigan 48116 (US)
(74) Vertreter: Bauer Vorberg Kayser Patentanwälte
(86) Internationale Anmeldenummer: PCT/EP2007/055265
(87) Internationale Veröffentlichungsnummer: WO 2007/141172

(56) Entgegenhaltungen:
- EP-A- 1 710 126
- WO-A1-98/18657
- DE-U1-202004 009 726

## Beschreibung

Die Erfindung betrifft eine Luftschall absorbierende Motorraumverkleidung für Kraftfahrzeuge, insbesondere in Form einer Motorhaubenverkleidung, mit einer offenporigen, luftdurchlässigen Schaumstoffschicht aus Kunststoff.

Zur Verringerung des Geräuschpegels werden Kraftfahrzeuge üblicherweise mit schallabsorbierenden Motorhaubenverkleidungen ausgestattet. Die Steifigkeit herkömmlicher aus Schaumstoff hergestellter Motorhaubenverkleidungen ist häufig unbefriedigend. Zudem besteht bei aus Schaumstoff hergestellten Motorraumverkleidungen ein Problem bezüglich der Entflammbarkeit des Schaumstoffs, sofern der Schaumstoff nicht mit einem Flammenhemmstoff ausgerüstet ist.

Des weiteren sind schallabsorbierende Motorhaubenverkleidungen bekannt, die eine Glasfaserschicht aufweisen. Glasfasern sind zwar vorteilhaft hinsichtlich des Brandverhaltens und der Steifigkeit einer daraus hergestellten Motorhaubenverkleidung, sie besitzen jedoch bei leichtgewichtiger Ausführung nur eine relativ geringe akustische Wirksamkeit. Um mit einer Glasfaserschicht die gleiche akustische Wirksamkeit wie mit einem offenporigen Schaumstoff zu erzielen, muss die Glasfaserschicht eine Dichte aufweisen, die wesentlich höher liegt als die Dichte eines offenporigen Schaumstoffs. Ferner bietet eine Glasfaserschicht kein so gutes optisches

Erscheinungsbild wie eine Schaumstoffschicht.

Eine Luftschall absorbierende Motoraumverkleidung gemäß dem Oberbegrift des Anspruchs 1 ist aus der WO 98/18657 A bekannt.

Der vorliegenden Erfindung liegt die Aufgabe zugrunde, eine schallabsorbierende Verkleidung der eingangs genannten Art bereitzustellen, die relativ leichtgewichtig, selbstragend und schwerentflammbar ist sowie eine gute akustische Wirksamkeit aufweist.

Gelöst wird diese Aufgabe durch eine Motorraumverkleidung, insbesondere eine Motorhaubenverkleidung, mit den Merkmalen des Anspruchs 1.

Die erfindungsgemäße Motorraumverkleidung umfasst eine offenporige, luftdurchlässige Schaumstoffschicht aus Kunststoff, die auf ihrer Rückseite mit einer Faserschicht aus mineralischen Fasern versehen ist, wobei die Schaumstoffschicht eine Dicke von weniger als 6 mm und einen spezifischen Strömungswiderstand im Bereich von 100 bis 1200 Ns/m³ aufweist, während die Faserschicht eine Dicke von mehr als 6 mm und ein Flächengewicht von weniger als 800 g/m² aufweist.

Der Materialaufbau der erfindungsgemäßen Motorraumverkleidung kombiniert die vorteilhaften Eigenschaften von mineralischen Fasern und Schaumstoff. Er sieht eine relativ dünne Schaumstoffschicht an der Vorderseite bzw. sichtbaren Seite der Verkleidung vor, wodurch im Vergleich zu einer allein verwendeten Glasfaserschicht eine verbesserte äußere Erscheinung erzielt wird. Insbesondere ermöglicht die Schaumstoffschicht die Ausbildung von gut sichtbaren Designelementen. Beispielsweise können in die Schaumstoffschicht dekorative Reliefbilder oder andere dreidimensionale Strukturen eingeprägt bzw. eingeformt sein. Die dünne Schaumstoffschicht, die erfindungsgemäß so ausgebildet oder hergerichtet ist, dass sie einen relativ hohen Strömungswiderstand aufweist, stellt eine gute Schallabsorption sicher. Die Faserschicht ist dagegen vergleichsweise dick ausgebildet. Ihre mineralischen Fasern sind federnd-aufgelockert geschichtet, so dass die Faserschicht weich und leicht zusammenpressbar ist. Da der größte Teil der erfindungsgemäßen Verkleidung aus mineralischen Fasern, vorzugsweise Glasfasern besteht, ist es relativ einfach, einen flammenresistenten Materialaufbau zu erzeugen. Die Faserschicht verleiht der erfindungsgemäßen Verkleidung eine gute Steifigkeit und Eigenstabilität. Die Faserschicht kann vergleichsweise leichtgewichtig ausgebildet werden, da sie in erster Linse als Träger für die dünne Schaumstoffschicht dient, welche hauptsächlich die schallabsorbierende Funktion der selbsttragenden Motorraumverkleidung ausübt.

Die erfindungsgemäße Motorraumverkleidung lässt sich kostengünstiger herstellen als entsprechende Verkleidungen, die im wesentlichen aus Schaumstoff bestehen, da sie zur Erzielung einer ausreichenden Steifigkeit nicht die Verwendung teurer Fasergelege erfordert, welche bei herkömmlichen schallabsorbierenden Verkleidungen auf Schaumstoffbasis häufig erforderlich sind. Andererseits ist die erfindungsgemäße Motorraumverkleidung erheblich leichte= als herkömmliche, im wesentlichen aus Glasfasern bestehende Motorraumverkleidungen mit schallabsorbierender Funktion. Denn diese herkömmlichen Verkleidungen aus Glasfasern erfordern eine sehr hohe Glasfaserdichte, wenn sie ein Schallabsorptionsvermögen bieten sollen, das demjenigen gattungsgemäßer Verkleidungen aus Schaumstoff entspricht.

Die Dicke der Schaumstoffschicht, die vorzugsweise aus Polyurethanschaumstoff besteht, beträgt bei der erfindungsgemäßen Motorraumverkleidung vorzugsweise weniger als die Hälfte der Dicke der Faserschicht. Die Dicke der Schaumstoffschicht kann beispielsweise im Bereich von ca. 10 bis 45% der Dicke der Faserschicht liegen. Besonders bevorzugt ist eine Ausgestaltung, bei der die Dicke der Schaumstoffschicht weniger als ein Drittel, insbesondere weniger als ein Viertel der Dicke der Faserschicht beträgt.

Gemäß einer besonders bevorzugten Ausgestaltung hat die Schaumstoffschicht eine Dicke von weniger als 5 mm und einen spezifischen Strömungswiderstand im Bereich von 300 bis 1200 Ns/m³ aufweist.

Zur Erzielung eines guten Schallabsorptionsvermögens ist gemäß einer anderen vorteilhaften Weiterbildung der Erfindung vorgesehen, dass die Schaumstoffschicht an ihrer Vorderseite eine integrale, hautartige Oberflächenschicht besitzt, die einen höheren spezifischen Strömungswiderstand als die sich daran einstückig anschließende Teilschicht (restliche Schicht) aufweist.

Die integrale, hautartige Oberflächenschicht wird vorzugsweise durch eine Versinterung der Oberfläche der Schaumstoffschicht erzeugt. Der spezifische Strömungswiderstand der Oberflächenschicht liegt vorzugsweise im Bereich von ca. 400 bis 2000 Ns/m³.

Alternativ oder ergänzend kann auf einer oder beiden Seiten der Schaumstoffschicht, also insbesondere zwischen der Schaumstoffschicht und der Faserschicht, eine einen hohen Strömungswiderstand aufweisende Schicht angebracht sein. Bei dieser zusätzlichen Schicht kann es sich um eine perforierte Folie oder ein dünnes Vlies aus natürlichen oder synthetischen Fasern handeln.

Die Dicke der perforierten Folie liegt beispielsweise im Bereich von 10 bis 120 µm, während der mittlere Durchmesser ihrer Durchbrechungen (Löcher) im Bereich von ca. 0,05 bis 4 mm, insbesondere von ca. 0,2 bis 3 mm liegt. Die Folie ist beispielsweise aus Polyethylen, Polyamid, Polyethylenterephthalat, Polypropylen oder Polyester hergestellt.

Das an der Schaumstoffschicht gegebenenfalls angebrachte dünne Vlies ist vorzugsweise aus Polyethylenterephthalatfasern, Polypropylenfasern und/oder Polyesterfasern hergestellt.

Der spezifische Strömungswiderstand der perforierten Folie bzw. des dünnen Vlieses liegt in einem Bereich von 400 bis 2000 Ns/m³.

Weitere bevorzugte und vorteilhafte Ausgestaltungen der erfindungsgemäßen Motorraumverkleidung sind in den Unteransprüchen angegeben.

Nachfolgend wird die Erfindung anhand einer mehrere Ausführungsbeispiele darstellenden Zeichnung näher erläutert. Es zeigen schematisch:
- Fig. 1: eine perspektivische Vorderansicht eines Kraft- fahrzeuges mit geöffneter Motorhaube und einer daran befestigten Motorhaubenverkleidung;
- Fig. 2: eine Querschnittansicht eines Abschnitts einer erfindungsgemäßen Motorhaubenverkleidung;
- Fig. 3: eine Querschnittansicht eines Abschnitts eines weiteren Ausführungsbeispiels einer erfindungs- gemäßen Motorhaubenverkleidung;
- Fig. 4: eine Querschnittansicht eines Abschnitts eines dritten Ausführungsbeispiels einer erfindungs- gemäßen Motorhaubenverkleidung;
- Fig. 5: eine Querschnittansicht eines Abschnitts eines vierten Ausführungsbeispiels einer erfindungs- gemäßen Motorhaubenverkleidung; und
- Fig. 6: eine Querschnittansicht eines Abschnitts eines fünften Ausführungsbeispiels einer erfindungs- gemäßen Motorhaubenverkleidung.

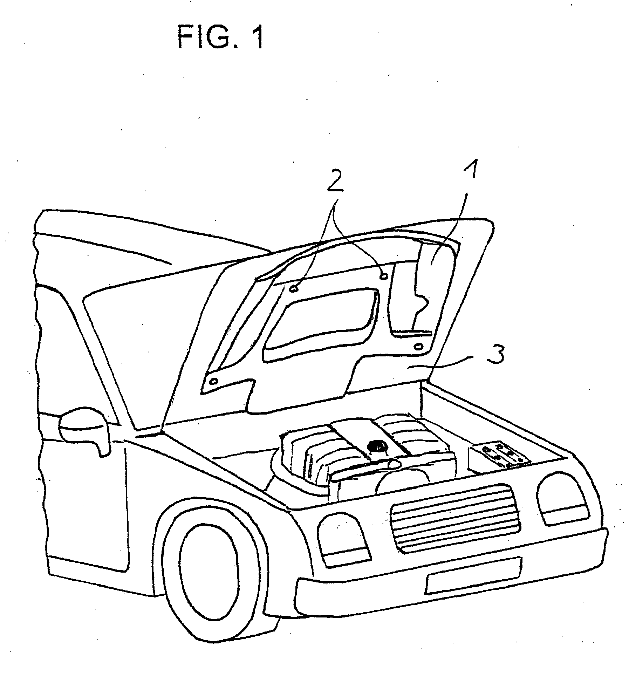

In Fig. 1 ist eine Luftschall absorbierende Motorraumverkleidung 1 dargestellt, die mit Clipelementen 2 oder dergleichen an der Unterseite einer Motorhaube 3 eines Kraftfahrzeuges befestigt ist.

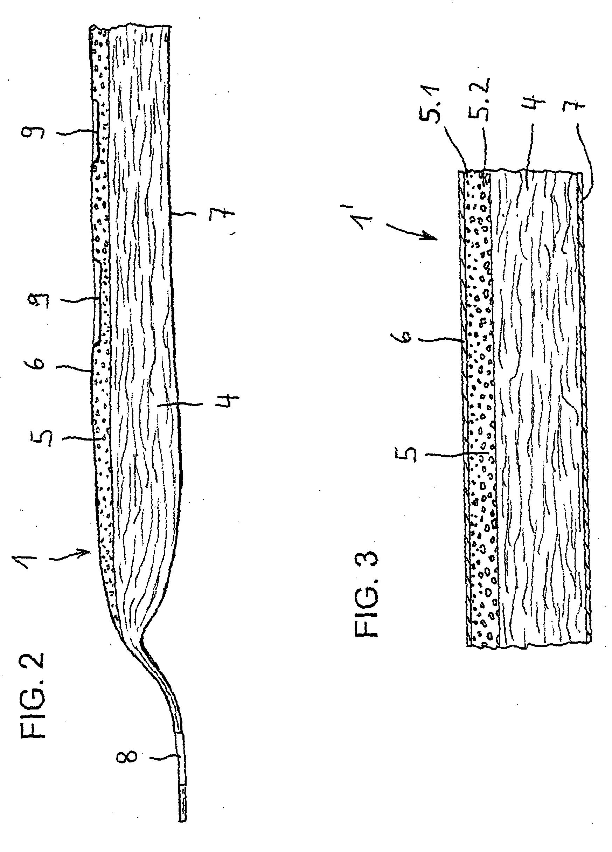

Die Motorhaubenverkleidung 1 ist selbsttragend ausgebildet und im wesentlichen aus einer aus mineralischen Fasern gebildeten Faserschicht 4 und einer relativ dünnen offenporigen Schaumstoffschicht 5 aufgebaut (vgl. Fig. 2). Durch die Faserschicht 4 ist die luftdurchlässige Schaumstoffschicht 5 beabstandet zum Blech der Motorhaube 2 bzw. einem Karosserieblech angeordnet.

Die Faserschicht 4 besteht vorzugsweise aus Glasfasern. Sie kann jedoch auch aus Steinfasern bzw. Steinwolle oder einer Mischung verschiedener mineralischer Fasern hergestellt sein. Die Glasfasern oder mineralischen Fasern bilden eine relativ lockere, weiche Schicht, die deutlich dicker als die Schaumstoffschicht 5 ist. Die mittlere Dicke der Faserschicht 4 liegt im Bereich von ca. 7 bis 20 mm; sie beträgt vorzugsweise mehr als 9 mm, beispielsweise ca. 15 mm.

Das Flächengewicht der flammenresistenten Faserschicht 4 liegt im Bereich von 200 bis 800 g/m², es beträgt beispielsweise ca. 400 g/m². Die Faserschicht 4 ist vorzugsweise relativ leicht. Ihr Flächengewicht beträgt vorzugsweise weniger als 400 g/m², insbesondere weniger als 300 g/m².

Die Schaumstoffschicht 5 besteht vorzugsweise aus Polyurethanschaumstoff und besitzt eine Dichte im Bereich von 5 bis 40 kg/m³, vorzugsweise im Bereich von 5 bis 25 kg/m³. Die Dicke der Schaumstoffschicht 5 liegt im Bereich von 2 bis 6 mm, sie beträgt beispielsweise nur ca. 4 mm. Sie weist einen relativ hohen spezifischen Strömungswiderstand auf, der im Bereich von 100 bis 1200 Ns/m³, vorzugsweise im Bereich von 300 bis 1200 Ns/m³ (Rayls) liegt.

Die Vorderseite, d.h. die dem Fahrzeugmotor zugewandte Seite der Schaumstoffschicht 5 ist mit einem dünnen Abdeckvlies 6 versehen. Das Abdeckvlies 6 ist mit der Schaumstoffschicht 5 verklebt. Ein entsprechendes Abdeckvlies 7 ist auf der Rückseite der Faserschicht 4 angeordnet. Die Gesamtdicke der Motorhaubenverkleidung 1 beträgt ca. 12 bis 25 mm. Wie in Fig. 2 dargestellt, sind die Schichten 3 bis 6 im Randbereich der Verkleidung 1 zusammengepresst. Die Gesamtschichtdicke beträgt dort beispielsweise weniger als 3 mm. In den zusammengepressten Randbereich können Löcher 8 zur Aufnahme von Clipselementen 2 oder anderen mit der Motorhaube 3 bzw. dem Karosserieblech verbindbaren Befestigungselementen eingearbeitet sein.

Die Schaumstoffschicht 5 hat neben der akustischen Funktion auch eine Design-Funktion. Wie in Fig. 2 zu erkennen ist, sind in die Vorderseite der Schaumstoffschicht 5 (einschließlich des darauf angeordneten Abdeckvlieses 6) Vertiefungen 9 eingearbeitet bzw. eingeformt, die Teil einer nicht näher dargestellten dekorativen Reliefstruktur, beispielweise eines Markenemblems des Kraftfahrzeugherstellers sind.

In Fig. 3 ist ein Ausführungsbeispiel dargestellt, bei dem die Schaumstoffschicht 5 an ihrer Vorderseite eine integrale, hautartige Oberflächenschicht 5.1 aufweist, die einen höheren spezifischen Strömungswiderstand besitzt als die sich daran einstückig anschließende Teilschicht 5.2. Die dem Motor zugewandte Oberflächenschicht 5.1 ist vorzugsweise durch thermische Behandlung mittels eines Heizstrahlers oder eines stärker als üblich erwärmten Formwerkzeuges versintert. Der spezifische Strömungswiderstand der Oberflächenschicht 5.1 liegt im Bereich von ca. 400 bis 2000 Ns/m³, vorzugsweise im Bereich von ca. 400 bis 1600 Ns/m³. Sie besitzt eine höhere Dichte als der damit integrale restliche Teil 5.2 der Schaumstoffschicht 5. Die Dichte der Oberflächenschicht 5.1 liegt im Bereich von ca. 40 bis 200 kg/m³.

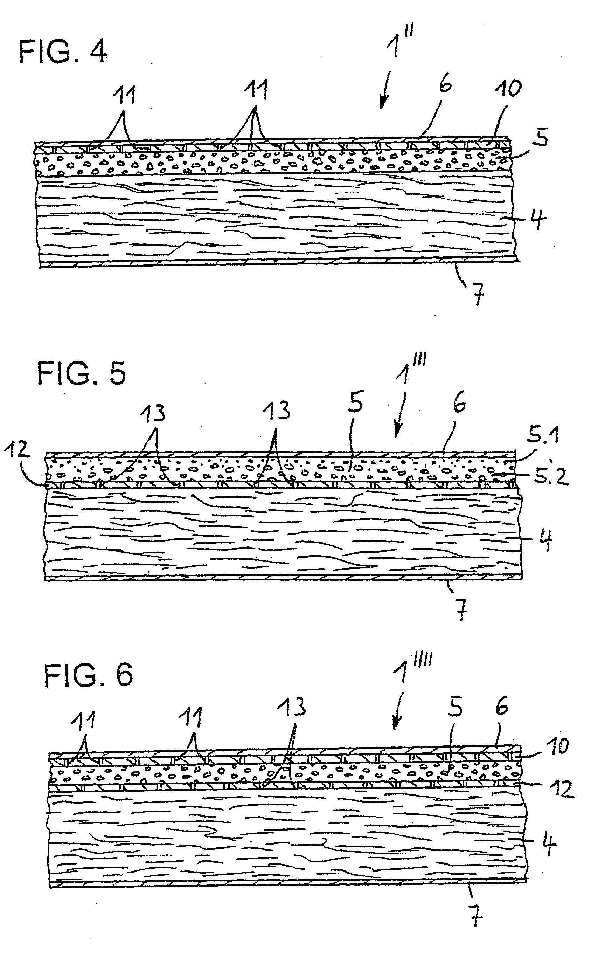

In Fig. 4 ist ein weiteres Ausführungsbeispiel einer erfindungsgemäßen Motorraumverkleidung 1" skizziert. Der Materialaufbau gemäß Fig. 4 unterscheidet sich von dem Materialaufbau gemäß Fig. 2 im wesentlichen nur dadurch, dass auf der dem Fahrzeugmotor zugewandten Seite der dünnen Schaumstoffschicht 5 eine noch dünnere Schicht 10 angeordnet ist, die einen höheren spezifischen Strömungswiderstand als die Schaumstoffschicht 5 aufweist oder den Strömungswiderstand der Schaumstoffschicht 5 zumindest erheblich vergrößert.

Bei dieser zusätzlichen Schicht 10 handelt es sich um eine perforierte Folie, die eine Vielzahl kleiner Löcher 11 mit einem mittleren Durchmesser im Bereich von ca. 0,2 bis 3,0 mm aufweist. Die Folie 10 ist ca. 15 bis 100 µm dick und kann insbesondere aus Polyamid oder Polyethylen bestehen.

In Fig. 5 ist ein weiteres Ausführungsbeispiel veranschaulicht. Der Materialaufbau gemäß Fig. 5 unterscheidet sich von demjenigen der Fig. 3 lediglich dadurch, dass zwischen der Schaumstoffschicht 5 und der Faserschicht 4 eine perforierte Folie 12 angeordnet ist, die eine Vielzahl von Durchbrechungen 13 mit einem mittleren Durchmesser im Bereich von 0,05 bis 4 mm aufweist.

Bei dem in Fig. 6 skizzierten Ausführungsbeispiel ist schließlich sowohl auf der Vorderseite der Schaumstoffschicht 5 als auch zwischen der Schaumstoffschicht 5 und der Faserschicht 4 je eine perforierte Folie 10, 12 angeordnet. Der mittlere Durchmesser der vielen kleinen Durchbrechungen 11, 13 liegt wiederum im Bereich von 0,01 bis 4 mm, vorzugsweise im Bereich von 0,02 bis 1 mm.

In den in den Figuren 4 bis 6 gezeigten Ausführungsbeispielen kann anstelle der jeweiligen Folie 10, 12 erfindungsgemäß auch mindestens ein Vlies mit einem spezifischen Strömungswiderstand im Bereich von 100 bis 2000 Ns/m³, vorzugsweise im Bereich von 300 bis 1800 Ns/m³ (Rayls) verwendet werden. Für das Vlies kommen verschiedene Fasermaterialien in Frage, insbesondere Naturfasern, Polyethylenterephthalatfasern und/oder Polypropylenfasern.

## Patentansprüche

1. Luftschall absorbierende Motorraumverkleidung für Kraftfahrzeuge, insbesondere in Form einer Motorhaubenverkleidung (1, 1' , 1" , 1"', 1""), mit einer offenporigen, luftdurchlässigen Schaumstoffschicht (5) aus Kunststoff,
wobei die Schaumstoffschicht (5) auf ihrer Rückseite mit einer Faserschicht (4) aus mineralischen Fasern versehen ist, **dadurch gekennzeichnet, dass** die Schaumstoffschicht (5) eine Dicke von weniger als 6 mm und einen spezifischen Strömungswiderstand im Bereich von 100 bis 1200 Ns/m³ aufweist, während die Faserschicht (4) eine Dicke von mehr als 6 mm und ein Flächengewicht von weniger als 800 g/m² aufweist.

2. Motorraumverkleidung nach Anspruch 1,
**dadurch gekennzeichnet, dass** die Dicke der Schaumstoffschicht (5) weniger als die Hälfte, vorzugsweise weniger als ein Drittel der Dicke der Faserschicht (4) beträgt.

3. Motorraumverkleidung nach Anspruch 1 oder 2,
**dadurch gekennzeichnet, dass** die Schaumstoffschicht (5) eine Dicke von weniger als 5 mm und einen spezifischen Strömungswiderstand im Bereich von 300 bis 1200 Ns/m³ aufweist.

4. Motorraumverkleidung nach einem der Ansprüche 1 bis 3,
**dadurch gekennzeichnet, dass** die Faserschicht (4) eine Dicke von mehr als 9 mm und/oder ein Flächengewicht von weniger als 450 g/m², vorzugsweise weniger als 400 g/m², insbesondere weniger als 300 g/m². aufweist.

5. Motorraumverkleidung nach einem der Ansprüche 1 bis 4,
**dadurch gekennzeichnet, dass** zwischen der Schaumstoffschicht (5) und der Faserschicht (4) eine Folie (12) angeordnet ist, die eine Vielzahl von Durchbrechungen (13) mit einem mittleren Durchmesser im Bereich von 0,05 bis 4 mm aufweist.

6. Motorraumverkleidung nach einem der Ansprüche 1 bis 5,
**dadurch gekennzeichnet, dass** auf der Vorderseite der Schaumstoffschicht (5) eine Folie (10) angeordnet ist, die eine Vielzahl von Durchbrechungen (11) mit einem mittleren Durchmesser im Bereich von 0,01 bis 4 mm, vorzugsweise im Bereich von 0,02 bis 1 mm aufweist.

7. Motorraumverkleidung nach Anspruch 5 oder 6,
**dadurch gekennzeichnet, dass** die perforierte Folie (10, 12) aus Polyamid, Polyethylen, Polyethylenterephthalat, Polypropylen oder Polyester hergestellt ist.

8. Motorraumverkleidung nach einem der Ansprüche 1 bis 7,
**dadurch gekennzeichnet, dass** die perforierte Folie (10, 12) einen spezifischen Strömungswiderstand im Bereich von 400 bis 2000 Ns/m³ aufweist.

9. Motorraumverkleidung nach einem der Ansprüche 1 bis 8,
**dadurch gekennzeichnet, dass** zwischen der Schaumstoffschicht (5) und der Faserschicht (4) ein Vlies angeordnet ist, das einen spezifischen Strömungswiderstand im Bereich von 400 bis 2000 Ns/m³ aufweist.

10. Motorraumverkleidung nach einem der Ansprüche 1 bis 9,
**dadurch gekennzeichnet, dass** auf der Vorderseite der Schaumstoffschicht (5) ein Vlies angeordnet ist, das einen spezifischen Strömungswiderstand im Bereich von 100 bis 2000 Ns/m³, vorzugsweise im Bereich von 300 bis 1800 Ns/m³ aufweist.

11. Motorraumverkleidung nach Anspruch 9 oder 10,
**dadurch gekennzeichnet, dass** das Vlies aus Polyethylenterephthalatfasern, Polypropylenfasern und/oder Polyesterfasern hergestellt ist.

12. Motorraumverkleidung nach einem der Ansprüche 1 bis 11,
**dadurch gekennzeichnet, dass** die Schaumstoffschicht (5) ein Dichte im Bereich von 5 bis 40 kg/m³, vorzugsweise im Bereich von 5 bis 25 kg/m³ aufweist.

13. Motorraumverkleidung nach einem der Ansprüche 1 bis 12,
**dadurch gekennzeichnet, dass** die Schaumstoffschicht (5) an ihrer Vorderseite eine integrale, hautartige Oberflächenschicht (5.1) aufweist, die einen höheren spezifischen Strömungswiderstand aufweist als die sich daran einstückig anschließende Teilschicht (5.2) der Schaumstoffschicht (5).

14. Motorraumverkleidung nach Anspruch 13,
**dadurch gekennzeichnet, dass** die integrale, hautartige Oberflächenschicht (5.1) einen spezifischen Strömungswiderstand im Bereich von 400 bis 2000 Ns/m³ aufweist.

15. Motorraumverkleidung nach Anspruch 13 oder 14,
**dadurch gekennzeichnet, dass** die integrale, hautartige Oberflächenschicht (5.1) eine gesinterte Oberflächenschicht ist.

16. Motorraumverkleidung nach einem der Ansprüche 13 bis 15,
**dadurch gekennzeichnet, dass** die integrale, hautartige Oberflächenschicht (5.1) eine Dichte im Bereich von 40 bis 200 kg/m³ aufweist.

17. Motorraumverkleidung nach einem der Ansprüche 1 bis 16,
**dadurch gekennzeichnet, dass** die Schaumstoffschicht (5) aus Polyurethanschaum besteht.

18. Motorraumverkleidung nach einem der Ansprüche 1 bis 17,
**dadurch gekennzeichnet, dass** die Faserschicht (4) aus Glasfasern und/oder Steinfasern besteht.

19. Motorraumverkleidung nach einem der Ansprüche 1 bis 18,
**dadurch gekennzeichnet, dass** diese an ihrer Vorderseite mit einem Abdeckvlies (6) versehen ist.

20. Motorraumverkleidung nach Anspruch 19,
**dadurch gekennzeichnet, dass** das Abdeckvlies (6) mit der Schaumstoffschicht (5) verklebt ist.

21. Motorraumverkleidung nach einem der Ansprüche 1 bis 20,
**dadurch gekennzeichnet, dass** auf der Rückseite der Faserschicht (4) ein Abdeckvlies (7) angeordnet ist.

22. Motorraumverkleidung nach einem der Ansprüche 1 bis 21,
**dadurch gekennzeichnet, dass** deren Schichten (4, 5, 6, 7) randseitig auf eine Gesamtschichtdicke von weniger als 3 mm zusammengepresst sind.

23. Motorraumverkleidung nach Anspruch 22,
**dadurch gekennzeichnet, dass** in dem zusammengepressten Randbereich Löcher (8) zur Aufnahme von Befestigungselementen ausgebildet sind.

24. Motorraumverkleidung nach einem der Ansprüche 1 bis 23,
**dadurch gekennzeichnet, dass** in die Vorderseite der Schaumstoffschicht (5) eine oder mehrere ein Dekor oder Emblem bildende Vertiefungen (9) eingeformt oder eingearbeitet sind.

## Claims

1. Airborne-sound-absorbing engine compartment insulation for motor vehicles, in particular in the form of engine hood insulation (1, 1', 1", 1"', 1""), with an open-pored, air-permeable foam layer (5) consisting of plastic,
wherein the foam layer (5) is provided on its rear with a fibre layer (4) consisting of mineral fibres, **characterised in that** the foam layer (5) has a thickness of less than 6 mm and a specific flow resistance in the range between 100 and 1,200 Ns/m³, whereas the fibre layer (4) has a thickness of more than 6 mm and a weight per unit area of less than 800 g/m².

2. Engine compartment insulation according to Claim 1,
**characterised in that** the thickness of the foam layer (5) is less than half, preferably less than a third of the thickness of the fibre layer (4).

3. Engine compartment insulation according to Claim 1 or 2,
**characterised in that** the foam layer (5) has a thickness of less than 5 mm and a specific flow resistance in the range between 300 and 1,200 Ns/m³.

4. Engine compartment insulation according to one of Claims 1 to 3,
**characterised in that** the fibre layer (4) has a thickness of more than 9 mm and/or a weight per unit area of less than 450 g/m², preferably less than 400 g/m², in particular less than 300 g/m².

5. Engine compartment insulation according to one of Claims 1 to 4,
**characterised in that** a foil (12) is arranged between the foam layer (5) and the fibre layer (4), which foil has a multiplicity of perforations (13) with an average diameter in the range between 0.05 and 4 mm.

6. Engine compartment insulation according to one of Claims 1 to 5,
**characterised in that** a foil (10) is arranged on the front of the foam layer (5), which foil has a multiplicity of perforations (11) with an average diameter in the range between 0.01 and 4 mm, preferably in the range between 0.02 and 1 mm.

7. Engine compartment insulation according to Claim 5 or 6,
**characterised in that** the perforated foil (10, 12) is produced from polyamide, polyethylene, polyethylene terephthalate, polypropylene or polyester.

8. Engine compartment insulation according to one of Claims 1 to 7,
**characterised in that** the perforated foil (10, 12) has a specific flow resistance in the range between 400 and 2,000 Ns/m³.

9. Engine compartment insulation according to one of Claims 1 to 8,
**characterised in that** a fleece is arranged between the foam layer (5) and the fibre layer (4), which fleece has a specific flow resistance in the range between 400 and 2,000 Ns/m³.

10. Engine compartment insulation according to one of Claims 1 to 9,
**characterised in that** a fleece is arranged on the front of the foam layer (5), which fleece has a specific flow resistance in the range between 100 and 2,000 Ns/m³, preferably in the range between 300 and 1,800 Ns/m³.

11. Engine compartment insulation according to Claim 9 or 10,
**characterised in that** the fleece is produced from polyethylene terephthalate fibres, polypropylene fibres and/or polyester fibres.

12. Engine compartment insulation according to one of Claims 1 to 11, **characterised in that** the foam layer (5) has a density in the range between 5 and 40 kg/m³, preferably in the range between 5 and 25 kg/m³.

13. Engine compartment insulation according to one of Claims 1 to 12, **characterised in that** the foam layer (5) has an integral, skin-like surface layer (5.1) on its front, which has a higher specific flow resistance than the part-layer (5.2) of the foam layer (5) which is integrally attached to it.

14. Engine compartment insulation according to Claim 13, **characterised in that** the integral, skin-like surface layer (5.1) has a specific flow resistance in the range between 400 and 2,000 Ns/m³.

15. Engine compartment insulation according to Claim 13 or 14, **characterised in that** the integral, skin-like surface layer (5.1) is a sintered surface layer.

16. Engine compartment insulation according to one of Claims 13 to 15, **characterised in that** the integral, skin-like surface layer (5.1) has a density in the range between 40 and 200 kg/m³.

17. Engine compartment insulation according to one of Claims 1 to 16, **characterised in that** the foam layer (5) consists of polyurethane foam.

18. Engine compartment insulation according to one of Claims 1 to 17, **characterised in that** the fibre layer (4) consists of glass fibres and/or rock fibres.

19. Engine compartment insulation according to one of Claims 1 to 18,
**characterised in that** it is provided on its front with a covering fleece (6).

20. Engine compartment insulation according to Claim 19,
**characterised in that** the covering fleece (6) is adhesively bonded to the foam layer (5).

21. Engine compartment insulation according to one of Claims 1 to 20,
**characterised in that** a covering fleece (7) is arranged on the rear of the fibre layer (4).

22. Engine compartment insulation according to one of Claims 1 to 21,
**characterised in that** its layers (4, 5, 6, 7) are compressed at the edges to a total layer thickness of less than 3 mm.

23. Engine compartment insulation according to Claim 22,
**characterised in that** holes (8) are formed in the compressed edge region for receiving fixing elements.

24. Engine compartment insulation according to one of Claims 1 to 23,
**characterised in that** one or a plurality of depressions (9) which form a decoration or emblem are formed or worked into the front of the foam layer (5).

## Revendications

1. Habillage de compartiment moteur absorbant les bruits aériens, pour véhicules automobiles, en particulier sous forme d'un habillage de capot moteur (1, 1', 1", 1"', 1""), comprenant une couche en mousse (5) en matière plastique à porosité ouverte et perméable à l'air, ladite couche en mousse plastique (5) étant pourvue, sur sa face arrière, d'une couche fibreuse (4) en fibres minérales, **caractérisé par le fait que** ladite couche en mousse plastique (5) présente une épaisseur inférieure à 6 mm et une résistance spécifique à l'écoulement comprise dans la gamme de 100 à 1200 Ns/m³, tandis que la couche fibreuse (4) présente une épaisseur supérieure à 6 mm et un grammage inférieur à 800 g/m².

2. Habillage de compartiment moteur selon la revendication 1, **caractérisé par le fait que** l'épaisseur de la couche en mousse plastique (5) est inférieure à la moitié, de préférence inférieure à un tiers de l'épaisseur de la couche fibreuse (4).

3. Habillage de compartiment moteur selon la revendication 1 ou 2, **caractérisé par le fait que** la couche en mousse plastique (5) présente une épaisseur inférieure à 5 mm et une résistance spécifique à l'écoulement comprise dans la gamme de 300 à 1200 Ns/m³.

4. Habillage de compartiment moteur selon l'une quelconque des revendications 1 à 3, **caractérisé par le fait que** ladite couche fibreuse (4) présente une épaisseur supérieure à 9 mm et/ou un grammage inférieur à 450 g/m², de préférence inférieur à 400 g/m², en particulier inférieur à 300 g/m².

5. Habillage de compartiment moteur selon l'une quelconque des revendications 1 à 4, **caractérisé par le fait qu'**entre ladite couche en mousse plastique (5) et ladite couche fibreuse (4) est disposée une feuille (12) qui présente une pluralité de percées (13) ayant un diamètre moyen compris dans la gamme de 0,05 à 4 mm.

6. Habillage de compartiment moteur selon l'une quelconque des revendications 1 à 5, **caractérisé par le fait que** sur la face avant de ladite couche en mousse plastique (5) est disposée une feuille (10) qui présente une pluralité de percées (11) ayant un diamètre moyen compris dans la gamme de 0,01 à 4 mm, de préférence compris dans la gamme de 0,02 à 1 mm.

7. Habillage de compartiment moteur selon la revendication 5 ou 6, **caractérisé par le fait que** ladite feuille perforée (10, 12) est réalisée en polyamide, polyéthylène, téréphtalate de polyéthylène, polypropylène ou en polyester.

8. Habillage de compartiment moteur selon l'une quelconque des revendications 1 à 7, **caractérisé par le fait que** ladite feuille perforée (10, 12) présente une résistance spécifique à l'écoulement comprise dans la gamme de 400 à 2000 Ns/m³.

9. Habillage de compartiment moteur selon l'une quelconque des revendications 1 à 8, **caractérisé par le fait qu'**entre la couche en mousse plastique (5) et la couche fibreuse (4) est disposé un non-tissé qui présente une résistance spécifique à l'écoulement comprise dans la gamme de 400 à 2000 Ns/m³.

10. Habillage de compartiment moteur selon l'une quelconque des revendications 1 à 9, **caractérisé par le fait que** sur la face avant de la couche en mousse plastique (5) est disposé un non-tissé qui présente une résistance spécifique à l'écoulement comprise dans la gamme de 100 à 2000 Ns/m³, de préférence comprise dans la gamme de 300 à 1800 Ns/m³_{.}

11. Habillage de compartiment moteur selon la revendication 9 ou 10, **caractérisé par le fait que** ledit non-tissé est réalisé en fibres de téréphtalate de polyéthylène, en fibres de polypropylène et/ou en fibres de polyester.

12. Habillage de compartiment moteur selon l'une quelconque des revendications 1 à 11, **caractérisé par le fait que** ladite couche en mousse plastique (5) présente une densité comprise entre 5 et 40 kg/m³, de préférence comprise dans la gamme de 5 à 25 kg/m³.

13. Habillage de compartiment moteur selon l'une quelconque des revendications 1 à 12, **caractérisé par le fait que** ladite couche en mousse plastique (5) présente sur sa face avant une couche superficielle intégrale de type peau (5.1) qui présente une résistance spécifique à l'écoulement supérieure à celle de la couche partielle (5.2) de la couche en mousse plastique (5),qui y est adjacente d'un seul tenant.

14. Habillage de compartiment moteur selon la revendication 13, **caractérisé par le fait que** ladite couche superficielle intégrale de type peau (5.1) présente une résistance spécifique à l'écoulement comprise dans la gamme de 400 à 2000 Ns/m³.

15. Habillage de compartiment moteur selon la revendication 13 ou 14, **caractérisé par le fait que** ladite couche superficielle intégrale de type peau (5.1) est une couche superficielle frittée.

16. Habillage de compartiment moteur selon l'une quelconque des revendications 13 à 15, **caractérisé par le fait que** ladite couche superficielle intégrale de type peau (5.1) présente une densité comprise dans la gamme de 40 à 200 kg/m³.

17. Habillage de compartiment moteur selon l'une quelconque des revendications 1 à 16, **caractérisé par le fait que** ladite couche en mousse plastique (5) est réalisée en mousse de polyuréthane.

18. Habillage de compartiment moteur selon l'une quelconque des revendications 1 à 17, **caractérisé par le fait que** ladite couche fibreuse (4) est réalisée en fibres de verre et/ou en fibres de roche.

19. Habillage de compartiment moteur selon l'une quelconque des revendications 1 à 18, **caractérisé par le fait que** la face avant de celui-ci est pourvue d'un non-tissé de recouvrement (6).

20. Habillage de compartiment moteur selon la revendication 19, **caractérisé par le fait que** ledit non-tissé de recouvrement (6) est relié par collage à ladite couche en mousse plastique (5).

21. Habillage de compartiment moteur selon l'une quelconque des revendications 1 à 20, **caractérisé par le fait que** sur la face arrière de ladite couche fibreuse (4) est disposé un non-tissé de recouvrement (7).

22. Habillage de compartiment moteur selon l'une quelconque des revendications 1 à 21, **caractérisé par le fait que** ses couches (4, 5, 6, 7) sont comprimées sur le bord de manière à présenter une épaisseur totale de couche inférieure à 3 mm.

23. Habillage de compartiment moteur selon la revendication 22, **caractérisé par le fait que** la zone marginale comprimée est pourvue de trous (8) destinés à recevoir des éléments de fixation.

24. Habillage de compartiment moteur selon l'une quelconque des revendications 1 à 23, **caractérisé par le fait qu'**un ou plusieurs creux (9) formant un décor ou un emblème sont soit formés soit ménagés dans la face avant de la couche en mousse plastique (5).
